# EUROPEAN PATENT APPLICATION

(11) **EP 2 811 471 A1**
(43) Date of publication of application: **10.12.2014**
(21) Application number: 12867001.5
(22) Date of filing: 03.02.2012
(51) Int. Cl.: G07F 17/00

(54) **DEVICE AND METHOD FOR CREATING LINKS**

(71) Applicant: Kato Capital Group S.L., 48011 Bilbao (ES)
(72) Inventor: GRIJELMO MENCHÓN, Juan Carlos, E-48011 Bilbao (ES); SIGURBJÖRNSSON, Börkur, E-48011 Bilbao (ES); LAMBEAU, Louis, E-48011 Bilbao (ES); ILLUECA MARTÍNEZ, Montserrat, E-48011 Bilbao (ES); GONZÁLEZ MASSÓ, Arnau, E-48011 Bilbao (ES); NUENO GUITART, José Luis, E-48011 Bilbao (ES); LLOPART GUTIÉRREZ, Alexandra, E-48011 Bilbao (ES)
(74) Representative: Elzaburu S.L.P.
(86) International application number: PCT/ES2012/070072
(87) International publication number: WO 2013/113955

(57) **Abstract**

The invention relates to a device for creating automatic URL links, which inserts links, on the basis of a selected string of words including a target keyword, into an original multimedia content requested by an end user via a web page. When an inserted link is clicked, additional multimedia content, not included in the aforementioned original requested multimedia content, is displayed to the end user, offering reliable information related to the target keyword and provided by a reliable entity.

## Description

### FIELD OF THE INVENTION

The present invention refers to a device and method for creating automatic hypertext links to additional multimedia contents, which are external to a multimedia content and / or web page requested by an end Internet user.

### BACKGROUND OF THE INVENTION

Nowadays when a user is consulting a multimedia content in Internet, and wants to obtain additional information on a term, entity, individual, etc., mentioned in the document, he usually needs to open a new window or tab in order to find information that satisfies his needs.

Currently a search for documents related to terms or word chains in Internet requires the use of one or more computer programs to analyse an extensive and ordered set of data and / or scientific, literary texts, etc., namely, a body of documents, by running a search within said body. The search through a body of documents is normally conducted by means of a computer program commonly known as a search engine.

The result of the search is that the search algorithms create a list of links or URLs (Uniform Resource Locators), that is, Internet directions that enable a navigator to find and show the documents that should contain all or part of a set of key words entered by a user in the consultation of a Web page.

Often times the search returns many hits and the user cannot easily determine which results are relevant in accordance with his needs.

Therefore, even though there may be a high number of hits the search engine gives no guarantee that the recovered documents will be relevant to the context for which the user formulated his request, and so the user will find it necessary to refine the original search doing a new search in the initially recovered documents. As a result, conducting a search becomes imprecise and laborious for the user trying to find the most relevant documents.

Another drawback is that when clicking on a link from among the hits returned by the search engine, said engines give no guarantee that the associated information provided by said search will be obtained, because the link provider may have disappeared, the site remodelled, the link out of date, etc.

Furthermore, a conventional search engine returns a list of URL links pointing to documents without classifying them. If the theme being consulted is fairly broad, the list of documents returned may include links pertaining to many specific sub-themes, which likewise impairs user experience.

Hence there is a need to assign hypertext links to target terms included in a requested multimedia content so as to ensure that when clicking on a term the information returned is supplied by a trustworthy source and is relevant to the desired target term.

### SUMMARY

The present invention seeks to resolve or reduce one or more of the drawbacks explained above by means of a device and method for creating intelligent links to additional multimedia contents that are external to a multimedia origin available on a given website, as defined in the claims.

One aspect is to provide a device for creating automatic URL links that, based on a selected sequence of words containing a target term or keyword, inserts the created links in a source multimedia content requested by an end user through a web page. In other words, the creating device automatically inserts intelligent links into the source multimedia content, which supplies additional information regarding the target key word depending on the content of the source multimedia content.

The intelligent links are automatically inserted by the creating device into an identical source content each time the source content is requested by an end user.

Unlike a static method in which the links can be inserted into a multimedia content but the multimedia content remains unchanged over time, the method for creating links is dynamic, such that each time a source multimedia content is requested the creating device recovers said source content and inserts hypertext links in accordance with the number of target key words identified in that moment. Consequently, each time the same source content is requested the number of links inserted into said content can vary, it is not static.

The method for creating dynamic links automatically inserts intelligent links on the basis of the number of target key words that may have to be identified in a requested source content. As the number of target key words varies over time, the number of insertable the number of insertable links in a source multimedia content likewise varies over time.

The target key word corresponds to entities such as corporations, companies, institutions, individuals, etc., and is included in the source multimedia content requested by the end user from an Internet media provider of types of media such as communication, newspapers, etc.

The link creating device is adapted to be able to provide different links or the same link to the same target key word based on different sequences of words included in the same source content, depending on the semantic ambiguity of the sequence of words and the context of the source content.

Yet another aspect is to provide a link creating device that is adapted for assigning, respectively, different intelligent links to different additional external multimedia contents, where the additional external multimedia contents are grouped within an extended and ordered set of multimedia content, namely, a body of additional external documents supplied by entities related to the target key words.

Consequently, for each additional external multimedia content of the body of additional documents, there is at least one assignable hypertext link derived from a sequence of words, including the target key word found in the source content.

Another aspect is providing an ambiguity resolution algorithm in relation to the target key word included in the analysed sequence of words for the purpose of creating a hypertext, and inserting it into the requested source multimedia content.

The creating device provides intelligent links contextualized on the basis of the multimedia function, date of the request of the source content, geographic localization of the end user, etc.

Another aspect is transmitting a multimedia content request of the end user from the Internet media service provider to the link creating device, which, on receipt of the received request recovers the requested multimedia content to identify target key words included in an extended and ordered set of target key words.

Yet another aspect of the creating device is to identify some target key word stored in the requested document and insert intelligent hypertext links based on the selection of a more relevant sequence of words, in accordance with the subject of the multimedia document selected by the end user.

Still another aspect of the creating device is to transmit the modified multimedia content, that is, the requested source multimedia content including the generated intelligent hypertext links to a device of the end customer to be displayed to said customer through the navigator from which the original request was made. In the event a target key word included in the modified multimedia content is clicked on, an additional external multimedia content is recovered based on the hypertext link associated to the key word, thus displaying the recovered content to the end user.

Still another aspect of the creating device is to maintain and update at least one body of source multimedia contents provided by the Internet service provider, a body of additional external multimedia contents supplied by the entities, and a body of usable information elements for resolving semantic ambiguities in a requested source multimedia content.

The links creating device automatically generates URL Internet directions; supplies resources for information originating from trustworthy entities through an Internet media provider that end users can trust, thus enhancing the final experience of the same; provides a way for the Internet media provider to generate income; and provides means for assessing the penetration of the contents or multimedia messages issued by the trustworthy entities themselves.

### BRIEF DESCRIPTION OF THE FIGURES

A more detailed description of the device in accordance with the embodiments of the invention is given in the following description based on the attached figure, in which:

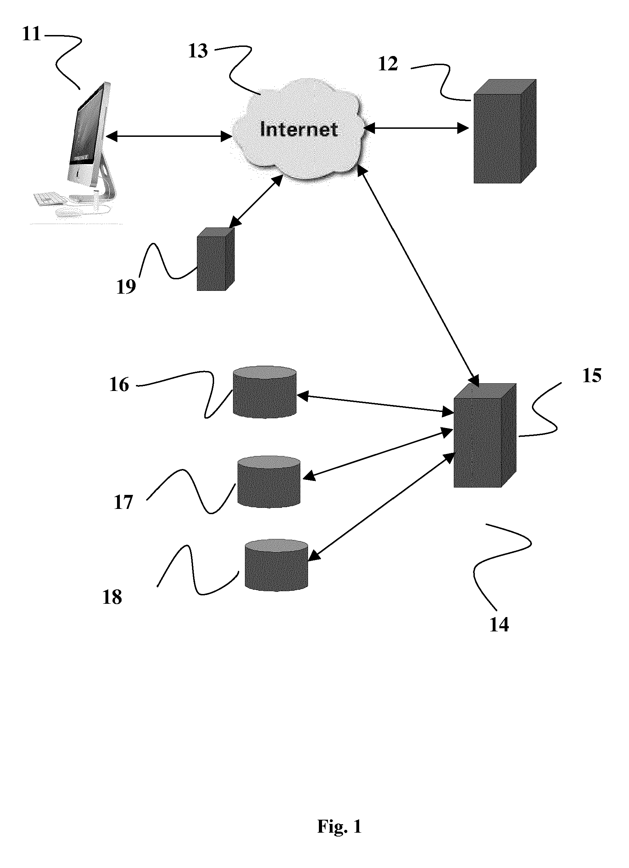

Figure 1 displays a schematic view of a system for automatically creating Internet links.

### DESCRIPTION OF A EMBODIMENT

Figure 1 shows a diagram of device 14 for automatically creating intelligent hypertext links assigned to additional multimedia contents external to a source multimedia content requested by an end user.

Automatic link creating device 14 includes external multimedia content server 15 that can connect to storage unit 16 for source multimedia content provided by Internet media provider 12, storage unit 17 for additional external multimedia contents provided by entities and associated to target key words provided by the entities themselves, and storage unit 18 of elements of information useful for resolving semantic ambiguities in a source multimedia content requested by an end user.

The end user makes a request for a source multimedia content from device 11 of the customer, through a web page of a navigator, namely source server 12 included in a media provider on Internet.

In reply to the receipt of the request for a source content, external server 15 of link creating device 14 extracts the requested source content through Internet network 13 from source content unit 16 and conducts a search of key words associated to the entities stored in entities unit 17.

In the event of a positive hit, external server 15 executes a link creating algorithm to generate an intelligent URL link, which is inserted into the source content through the identified key word. The modified multimedia content is transmitted through external server 15 to device 11 of the customer through Internet network 13, to be displayed on an audiovisual screen of the requesting end user.

The Internet media provider, such as a newspaper, provides the source multimedia content from source server 12 to source content unit 16 through Internet network 13 and external server 15.

Unit 17 of the entities receives additional external multimedia contents and target key words from servers of entities such as corporations, companies, institutions, individuals, etc., through network 13 and external server 15. A target key word is a reference to a brand, place name, proper name, etc., which is associable to a body of additional external multimedia contents.

After external server 15 receives a source multimedia content, it conducts a search in the content itself to identify key words included in the body of words.

In the event of a positive hit, external server 15 executes a link creating algorithm to generate an intelligent URL link, which can be inserted into the source content.

The link creating algorithm carries out a resolution of ambiguities step for the purpose of identifying the entity associable to the target key word, and immediately afterwards carries out a contextualization step so as to identify the additional external multimedia content that has to be linked to the target key word included in the source content.

After an additional multimedia content has been assigned to an identified key word, external server 15 automatically provides a hypertext link and inserts the generated link into the source content, thus transmitting a modified multimedia content to customer device 11 .

The aforesaid steps are repeated by hypertext link creating device 14 as many times as there are key words that have been identified within the source content received during the search step.

In the event the end user clicks on a key word in the modified content, the navigator recovers and displays the additional external multimedia content assigned by creating device 14 to the URL Internet direction inserted into the modified content by external server 15.

Creating device 14 maintains and updates source multimedia content storage unit 16, additional external source multimedia content storage unit 17, and elements of information storage unit 18, comprising the actions of adding and deleting words and contents.

Therefore, an identical source multimedia content can includea varying number of key words over time, which are assignable to different additional external multimedia contents which likewise vary over time.

Creating device 14 receives all of the requests emitted by a plurality of end users, such that if external server 15 does not identify a target key word in the recovered source content, it transmits the source content requested by the end user, that is, creating device 14 does not insert any hypertext link into the source content requested by the end user and transmits said source content to the requesting user.

The method for creating intelligent hypertext links is executed automatically by computer, which is installable on an internal memory of a computer having input and output units, as well as processor units.

For this purpose the computer program comprises codes configured for executing the steps of the aforesaid method when it is executed by the computer or computer system. Furthermore, the executable codes can be saved by means of a readable carrier medium inside a computer.

## Claims

1. **A creating device** of hypertext links in a source multimedia content **characterized in that** creating device (14) includes external server (15), which, in response to a request for a multimedia content requested from device (11) of a customer through telecommunications network (13), is adapted for recovering the requested source multimedia content; identifies a target key word in the source multimedia content; in the event of a positive hit inserts a hypertext link in the identified target key word and transmits the modified multimedia content to device (11) of the requesting customer.

2. **A creating device** according to claim 1, in which the hypertext link is assignable to an additional external multimedia content providing trustworthy information in relation to said target key word supplied by a likewise trustworthy entity.

3. A **creating device** according to claim 1, in which external server (15) can be connected to source multimedia content storage unit (16), provided by Internet media supplier (12).

4. **A creating device** according to claim 3, in which Internet media provider (12) is a means of communication such as a newspaper, magazine, blog, etc.

5. **A creating device** according to claim 1, in which external server (15) can be connected to additional external source multimedia content storage unit (17) having source multimedia provided by entities, and associable to target key words provided by the entities themselves.

6. **A creating device** according to claim 5, in which the entity is a corporation, company, institution, individual, brand, product, etc., and the target key words are related to said entity.

7. **A creating device** according to claim 1, in which external server (15) can be connected to elements of information storage unit (18), having useful elements of information for resolving semantic ambiguities in the source multimedia content requested by the end user.

8. **A creating device** according to claim 7, in which external server (15) is adapted for executing a link creating algorithm for associating a target key word identified with a provider entity of additional external multimedia contents, depending on the context in which the identified target key word is found, by assigning an additional stored external multimedia content.

9. **A method of creating** hypertext links in a source multimedia content **characterized in that** the method comprises the following steps:
➢ Recovery of the requested source multimedia content in response to the receipt of a request for a multimedia content requested from device (11) of a customer through telecommunications network (13) in external server (15).
➢ Identification by means of external server (15) of a target key word in the original multimedia content.
➢ Insertion, in the event of a positive hit, of a hypertext link into the identified target key word, and
➢ Transmission of the modified multimedia content to device (11) of the requesting customer.

10. **A method** according to claim 9, in which the method further comprises an assignment step, by means of external server (15), of an additional external multimedia content offering trustworthy information related to said target key word supplied by a trustworthy entity, and also to the inserted hypertext link.

11. **A method** according to claim 9, having the source multimedia content provided by Internet media provider (12), which can be stored on source multimedia content storage unit (16).

12. **A method** according to claim 9, having additional external multimedia contents provided by entities and associated by means of external server (15) to target key words provided by said entities themselves, that can be stored on additional external multimedia contents storage unit (17).

13. **A method** according to claim 9 having elements of useful information for resolving semantic ambiguities in the source multimedia content requested by the end user that can be stored in elements of information storage unit (18).

14. **A method** according to claim 9, having an executed link creating algorithm through external server (15), which comprises ambiguity resolution steps to identify the entity associable to the identified target key word, and contextualization for identifying the additional external multimedia content that can be linked to the target key word identified in the source content.

15. **An installable computer program** that can be installed on an internal computer memory with input and output for the units and a processing unit, in which the program consists in executable codes configured for carrying out the necessary steps in any of claims 9 to 14 when they are executed by a computer.

16. **The computer program** of claim 15, copyable on a support that can be read by a computer.
